# EUROPÄISCHE PATENTSCHRIFT

(11) **EP 2 414 129 B1**
(45) Veröffentlichungstag und Bekanntmachung des Hinweises auf die Patenterteilung: **29.10.2014**
(21) Anmeldenummer: 10715758.8
(22) Anmeldetag: 31.03.2010
(51) Int. Cl.: B23K 15/00, B23K 26/34, B23K 28/00, C23C 26/00, F01D 25/24

(54) **VERFAHREN ZUR SCHWEISSHERSTELLUNG EINES GROSSDIMENSIONIERTEN BAUTEILS AUS SPHÄROGUSS UNTER VERWENDUNG VON LASER-AUFTRAGGESCHWEISSTEN PUFFERMATERIALIEN UND ELEKTRONSCHWEISSEN**
METHOD OF WELD MANUFACTURING A LARGE-DIMENSION COMPONENT PART MADE FROM SPHEROIDAL GRAPHITE IRON USING LASER BUILTUP MATERIALS AND ELECTRON BEAM WELDING
PROCÉDÉ DE FABRICATION PAR SOUDAGE D'UN COMPOSANT DE GRANDE TAILLE EN FONTE NODULAIRE EN UTILISANT DES MATÉRIAUX APPORTÉS PAR RECHARGEMENT LASER ET SOUDAGE PAR FAISCEAU D'ELECTRON

(30) Priorität: 03.04.2009 EP 09004999
(43) Veröffentlichungstag der Anmeldung: 08.02.2012
(73) Patentinhaber: Siemens Aktiengesellschaft, 80333 München (DE)
(72) Erfinder: BRUSSK, Stefan, 45479 Mülheim an der Ruhr (DE); NIEPOLD, Karsten, 45481 Mülheim (DE); SHENG, Shilun, 46149 Oberhausen (DE); WILHELM, Claus, 47807 Krefeld (DE); GRÜGER, Birgit, 44329 Dortmund (DE); KRETSCHMER, Michael, 200052 Shanghai (CN)
(86) Internationale Anmeldenummer: PCT/EP2010/054321
(87) Internationale Veröffentlichungsnummer: WO 2010/112552

(56) Entgegenhaltungen:
- EP-A- 0 221 752
- JP-A- 2002 113 583
- US-B1- 6 589 671
- DATABASE WPI Week 200559 Thomson Scientific, London, GB; AN 2005-579686 XP002543949 -& RU 2 257 984 C2 (LIPETSK SVOBODNYI SOKOL METAL WKS) 10. August 2005 (2005-08-10)

## Beschreibung

Die Erfindung betrifft ein Verfahren zur Herstellung eines groß dimensionierten Bauteils aus Sphäroguss gemäß dem Oberbegriff des Anspruchs 1 (siehe, z.B., 242 257 984).

Sphäroguss ist ein Gusseisen mit Kugelgraphit, mit dem kostengünstig serienmäßig groß dimensionierte Bauteile hergestellt werden können. Beispielsweise ist herkömmlich das Gehäuse einer Dampfturbine aus Sphäroguss gefertigt. Die geometrischen Ausmaße einer Dampfturbine im oberen Leistungsbereich, wie sie beispielsweise in Dampfkraftwerken zur Stromerzeugung eingesetzt werden, sind jedoch so groß, dass beim Gießen des Sphäroguss Probleme auftreten können. So ist beispielsweise die Wahrscheinlichkeit hoch, dass in einem derartigen Dampfturbinengehäuse Unregelmäßigkeiten und Fehlstellen auftreten, die die Festigkeit des Dampfturbinengehäuses beeinträchtigen. Diese Unregelmäßigkeiten und Fehlstellen können je nach Lage in dem Bauteil und Funktion der betroffenen Stellen nicht tolerabel sein. Dadurch ist die maximal zulässige Größe der Gehäusebauteile aus Sphäroguss nach oben begrenzt. Abhilfe würde ein Gehäusebauteil schaffen, das aus mehreren kleinen, gießtechnisch unkritischen Teilen zusammengesetzt ist. Voraussetzung hierfür wäre allerdings, dass diese Teile miteinander verschweißt ein Gehäuse bilden können. Die Teile wären über großflächige Schweißverbindungen miteinander zu verbinden, wofür ein geeignetes Schweißverfahren notwendig wäre. Allerdings ist kein Fertigungsverfahren bekannt, mit dem derart großflächige Schweißverbindungen von Sphäroguss hergestellt werden können.

In aus Sphäroguss hergestellten Gussbauteilen treten in der Regel immer Unregelmäßigkeiten und Fehlstellen auf. Von der Größe und der Lage der Unregelmäßigkeiten und Fehlstellen hängt es ab, ob das betroffene Gussbauteil als Ausschuss verworfen werden muss. Für kleine lokale Fehlstellen sind Reparaturschweißverfahren bekannt. Ein derartiges Reparaturschweißverfahren ist beispielsweise Kaltschweißen mit einer Eisen-Nickel-Legierung. Bei dem Kaltschweißverfahren wird jedoch eine Schweißverbindung hergestellt, deren Festigkeit unterhalb der Festigkeit des Sphäroguss liegt. Daher ist das Kaltschweißverfahren für großflächige Verbindungsschweißungen nicht geeignet. Ein anderes Verfahren ist Warmschweißen, das jedoch nur bei einer Bauteilvorwärmung im Bereich von 500°C bis 600°C und eine daran anschließende Wärmenachbehandlung durchführbar ist. Das Warmschweißen ist daher sehr aufwändig und erzeugt einen Verzug des Bauteils, so dass das Warmschweißen für eine großflächige Verbindungsschweißung von Sphäroguss nicht geeignet ist.

Aufgabe der Erfindung ist es, ein Verfahren zur Herstellung eines Bauteils aus Sphäroguss zu schaffen, wobei das Bauteil große Ausmaße und dennoch eine hohe Festigkeit hat.

Das erfindungsgemäße Verfahren zur Herstellung eines Bauteils aus Sphäroguss ist im Anspruch 1 definiert.

Somit ist das Bauteil aus den mehreren Bauteilkomponenten gebildet, wobei in den Bauteilkomponenten unakzeptable Unregelmäßigkeiten und Fehlstellen im Sphäroguss unterbunden sind. Dadurch ist bei der Konstruktion des Bauteils prinzipiell aufgrund der Verwendung des Sphäroguss keine Obergrenze hinsichtlich der Festigkeit des Bauteils gesetzt. Als Strukturveränderung sind insbesondere Aufhärtungen in der Wärmeeinflusszone sowie die Zerstörung der Grundwerkstoffmatrix durch hohe Wärmeeinbringung zu verstehen.

Erfindungsgemäß werden die Bauteilkomponenten in einem Zweistufenschweißprozess zusammengefügt, wobei zuerst auf die als Schweißnahtflanken vorbereiteten Randkanten das Puffermaterial aufgetragen wird. Das Puffermaterial hat einen hohen Nickelgehalt und ist an den Sphäroguss sowie an das Verfahren zum Verschweißen der Randabschnitte angepasst. Durch den Zweistufenprozess ist eine großflächige Verbindungsschweißung von den Sphärogussbauteilen ermöglicht. Diese Schweißverbindung hat mechanische Eigenschaften, die vorteilhaft denen des Sphäroguss ähnlich sind. Dadurch kann das Bauteil groß dimensioniert sein, wobei das Bauteil aus kleinen, gießtechnisch unkritischen Bauteilkomponenten aufgebaut ist. Somit ist die Wahrscheinlichkeit von unakzeptablen Unregelmäßigkeiten und Fehlstellen in dem Bauteil gering und die Baubarkeit von dem groß dimensionierten Bauteil ermöglicht.

Das erfindungsgemäße Verfahren kann außerdem für eine Reparatur des Bauteils verwendet werden, indem von dem Bauteil ein beschädigter Abschnitt herausgetrennt wird und durch einen neuen Abschnitt ersetzt wird. Der neue Abschnitt wird unter Anwendung des erfindungsgemäßen Verfahrens in das bestehende Bauteil eingeschweißt.

Das Puffermaterial wird bevorzugt nickelhaltig und/oder mehrschichtig aufgetragen. Dadurch entsteht ein Anlasseffekt der jeweils vorherig aufgetragenen Schicht bzw. der Wärmeeinflusszone im Werkstoff der Bauteilkomponente. Für das Auftragsschweißen wird gemäß der Erfindung ein Laser-Pulver-Auftragsschweißverfahren verwendet.

Beim Verschweißen der Randabschnitte wird ein Elektronenstrahlschweißverfahren. Die Stärke des Pulvermaterials und die Parameter des Elektronenstrahlschweißverfahrens sowie des Laser-Pulver-Auftragschweißverfahrens werden gemäß der Erfindung derart gewählt, dass die Wärmeeinflusszone der Verschweißung durch das Elektronenstrahlschweißverfahren in dem Pulvermaterial angeordnet ist.

Im Folgenden wird eine bevorzugte Ausführungsform eines mit dem erfindungsgemäßen Verfahren hergestellten Bauteils anhand der beigefügten schematischen Zeichnungen erläutert.

Es zeigen:
- Fig. 1: eine perspektivische Ansicht einer erfindungsgemäßen Ausführungsform des Bauteils,

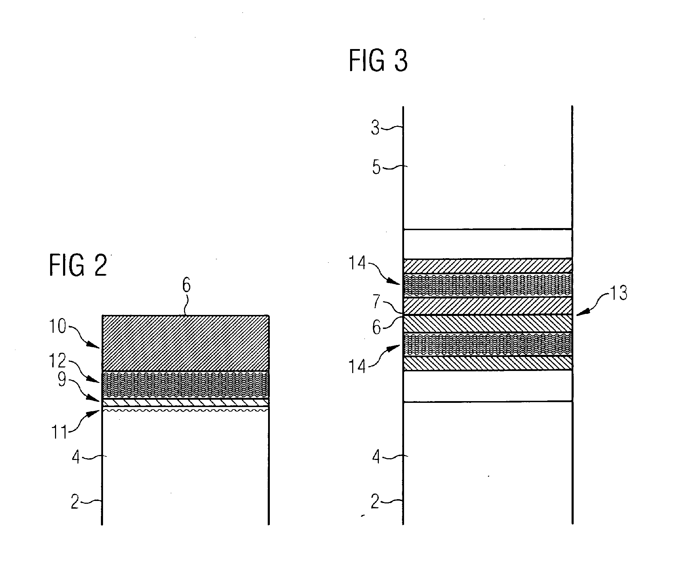

- Fig. 2: einen Querschnitt durch einen Randabschnitt einer ersten Bauteilkomponente des Bauteils nach einem ersten Herstellungsschritt und
- Fig. 3: einen Querschnitt der Randabschnitte der ersten Bauteilkomponente und einer zweiten Bauteilkomponente des Bauteils nach einem zweiten Herstellungsschritt.

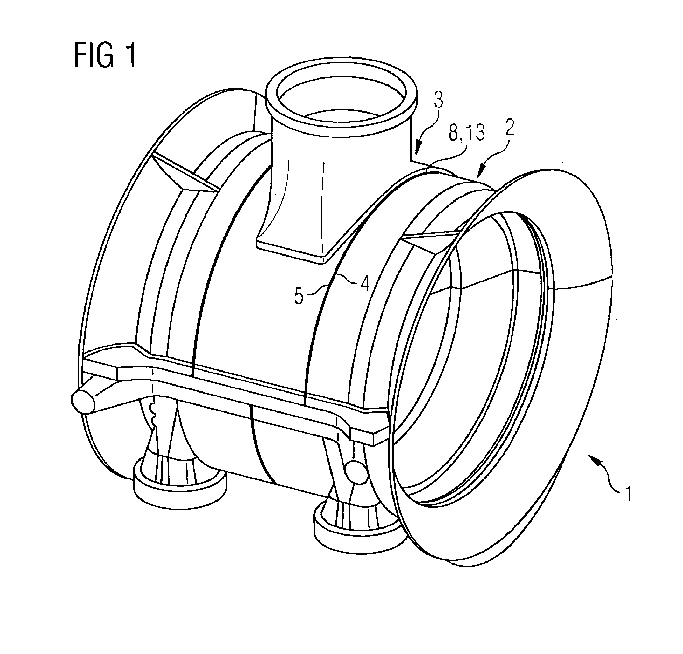

Wie es aus Fig. 1 ersichtlich ist, ist ein Bauteil als ein Dampfturbinen-Niederdruck-Innengehäuse 1 gezeigt. Das Gehäuse 1 setzt sich zusammen aus mehreren Bauteilkomponenten, insbesondere einer ersten Bauteilkomponente 2 und einer zweiten Bauteilkomponente 3. Die Bauteilkomponenten 2, 3 sind aneinander gelegt und bilden eine Teilfuge 8 aus. Ferner sind die Bauteilkomponenten 2, 3 so dimensioniert und gestaltet, dass sie ohne kritische Fehlstellen in ihrem Material aus Sphäroguss herstellbar sind.

Die erste Bauteilkomponente 2 weist einen Randabschnitt 4 auf, der unmittelbar benachbart neben einem Randabschnitt 5 der zweiten Bauteilkomponente 3 angeordnet ist. Der Randabschnitt 4 der ersten Bauteilkomponente 2 ist von einer Randkante 6 begrenzt, die stumpf an einer Randkante 7 anliegt, die den Randabschnitt 5 der zweiten Bauteilkomponente 3 begrenzt. Dadurch ist die Teilfuge 8 von den Randkanten 6, 7 gebildet.

Beim Herstellen des Gehäuses 1 werden die erste Bauteilkomponente 2 und die zweite Bauteilkomponente 3 separat in einem Sphärogussverfahren aus Sphäroguss hergestellt. Dabei ist die Gefahr gering, dass sich in den Bauteilkomponenten 2, 3 kritische Fehlstellen ausbilden. In einem ersten Fertigungsschritt wird die erste Bauteilkomponente 2 bereitgestellt. Auf ihre Randkante 6 wird eine erste Pulvermaterialschicht 9 mit einem Laser-Pulver-Auftragsschweißverfahren aufgetragen. Danach wird auf die erste Pulvermaterialschicht 9 eine zweite Pulvermaterialschicht 10 durch das Laser-Pulver-Auftragsschweißverfahren aufgebracht. Die Wärmeeinflusszone 11 der ersten Pulvermaterialschicht 9 ist in dem Randabschnitt 4 der ersten Bauteilkomponente 2 angeordnet. Die Wärmeeinflusszone 12 der zweiten Pulvermaterialschicht 10 ist in der ersten Pulvermaterialschicht 9 angeordnet. Die Randkante 7 des Randabschnitts 5 der zweiten Bauteilkomponente 3 wird ebenfalls wie die Randkante 6 mit einer ersten Pulvermaterialschicht 9 und einer zweiten Pulvermaterialschicht 10 versehen. In einem zweiten Fertigungsschritt werden die Bauteilkomponenten 2 und 3 mit ihren Randabschnitten 4 und 5 aneinander gelegt, so dass die Teilfuge 8 sich ausbildet. Die Teilfuge 8 wird mit einer Elektronenstrahlschweißnaht 13 verschweißt, wobei die Wärmeeinflusszonen 14 der Elektronenstrahlschweißnaht 13 in den Puffermaterialschichten angeordnet ist.

## Patentansprüche

1. Verfahren zur Herstellung eines Bauteils aus Sphäroguss, mit den Schritten:
Konstruktion des Bauteils (1) derart, dass das Bauteil (1) aus einer Mehrzahl an Bauteilkomponenten (2, 3) zusammengesetzt ist, die unter Ausbilden von Teilfugen (8) aneinandergelegt sind sowie so dimensioniert und gestaltet sind, dass sie ohne kritische Fehlstellen in ihrem Material aus Späroguss gießbar sind;
Herstellen der Bauteilkomponenten (2, 3) aus Sphäroguss; paarweises Bereitstellen der Bauteilkomponenten (2, 3), wobei eine erste der Bauteilkomponenten (2) und eine zweite der Bauteilkomponenten (3) zum benachbarten Aneinanderliegen vorgesehen sind, bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird; Auftragen von Puffermaterial (9, 10) auf die Randkante (6) der ersten Bauteilkomponente (2) und auf die Randkante (7) der zweiten Bauteilkomponente (3) durch Auftragsschweißen; Anlegen der zweiten Bauteilkomponente (3) mit ihrem Randabschnitt (5) an den Randabschnitt (4) der ersten Bauteilkomponente (2), so dass die Randkanten (6, 7) mit ihren Puffermaterialien (9, 10) aneinander liegen;
Verschweißen der Randabschnitte (4, 5), so dass die von den Randabschnitten (4, 5) gebildete Teilfuge (8) verschweißt ist und dadurch die erste und die zweite Bauteilkomponente (2, 3) miteinander befestigt sind, wodurch die erste und die zweite Bauteilkomponente (2, 3) zumindest teilweise das Bauteil (1) bilden, wobei das Puffermaterial (9, 10) derart gewählt ist, dass beim Verschweißen der Randabschnitte (4, 5) eine Strukturveränderung im Sphärogussmaterial der Bauteilkomponenten (2, 3) unterbunden ist, **dadurch gekennzeichnet, dass** für das Auftragsschweißen ein Laser-Pulver-Auftragsschweißverfahren verwendet wird,
wobei das Schweißverfahren ein Elektronenstrahlschweißverfahren (13) ist,
wobei die Stärke des Pulvermaterials und die Parameter des Elektronenstrahlschweißverfahrens sowie des Laser-Pulver-Auftragschweißverfahrens derart gewählt werden, dass die Wärmeeinflusszone (14) der Verschweißung (13) durch das Elektronenstrahlschweißverfahren in dem Puffermaterial (9, 10) angeordnet ist.

2. Verfahren gemäß Anspruch 1,
wobei das Puffermaterial (9, 10) nickelhaltig und/oder mehrschichtig aufgetragen wird.

3. Verfahren gemäß einem der Ansprüche 1 bis 2,
wobei beim Verschweißen der Randabschnitte (4, 5) ein Schweißverfahren mit hoher Einschweißtiefe und schmalem Schweißbad sowie kleiner Wärmeeinflusszone (14) verwendet wird.

## Claims

1. Method for the production of a part from ductile iron, comprising the steps:
designing the part (1) in such a way that the part (1) is composed of a plurality of part components (2, 3), which are placed on one another while forming partial joints (8) and are dimensioned and configured so that they can be cast from ductile iron without critical defects in their material;
producing the part components (2, 3) from ductile iron;
providing the part components (2, 3) in pairs, a first of the part components (2) and a second of the part components (3) being intended for contiguous placement in which one of the partial joints (8) is formed by a rim edge (6) of a rim section (4) of the first part component (2) and a rim edge (7) of a rim section (5) of the second part component (3);
depositing buffer material (9, 10) onto the rim edge (6) of the first part component (2) and onto the rim edge (7) of the second part component (3) by deposition welding;
placing the second part component (3) with its rim section (5) onto the rim section (4) of the first part component (2) so that the rim edges (6, 7) lie on one another with their buffer materials (9, 10);
welding the rim sections (4, 5) so that the partial joint (8) formed by the rim sections (4, 5) is welded and the first and second part components (2, 3) are thereby fastened to one another, as a result of which the first and second part components (2, 3) at least partially form the part (1), wherein the buffer material (9, 10) is selected so that a structural modification in the ductile iron material of the part components (2, 3) is prevented during the welding of the rim sections (4, 5), **characterized in that**
a laser powder deposition welding method is used for the deposition welding,
the welding method being an electron beam welding method (13), the thickness of the powder material and the parameters of the electron beam welding method and of the laser powder deposition welding method being selected so that the thermal influence zone (14) of the welding (13) by the electron beam welding method is arranged in the buffer material (9, 10).

2. Method according to Claim 1,
wherein the buffer material (9, 10) is deposited containing nickel and/or in a plurality of layers.

3. Method according to one of Claims 1 to 2,
wherein a welding method having a high welding depth and a narrow welding pool, and a small thermal influence zone (14), is used during the welding of the rim sections (4, 5).

## Revendications

1. Procédé de fabrication d'une pièce en fonte à graphite sphéroïdale, comprenant les stades :
construction de la pièce ( 1 ), de manière à ce que la pièce ( 1 ) soit composée d'une multiplicité de composants ( 2, 3 ) de pièce, qui, avec formation de joints ( 8 ) partiels, sont mis les uns à côté des autres ainsi que dimensionnés et conformés de manière à ce qu'ils puissent être coulés sans lacune critique dans leur matériau en fonte à graphite sphéroïdale ;
fabrication des composants ( 2, 3 ) de la pièce en fonte à graphite sphéroïdale ;
mise à disposition paire par paire des composants ( 2, 3 ) de la pièce, un premier des composants ( 2 ) de la pièce et un deuxième des composants ( 3 ) de la pièce étant prévus pour être mis l'un à côté de l'autre en voisinage, dans lequel l'un des joints ( 8 ) partiels est formé d'une arête ( 6 ) de bord d'une partie ( 4 ) de bord du premier composant ( 2 ) de la pièce et d'une arête ( 7 ) de bord d'une partie ( 5 ) de bord du deuxième composant ( 3 ) de la pièce ;
dépôt de matériau ( 9, 10 ) tampon sur l'arête ( 6 ) de bord du premier composant ( 2 ) de la pièce et sur l'arête ( 7 ) de bord du deuxième composant ( 3 ) de la pièce, par soudage avec apport ;
application du deuxième composant ( 3 ) de la pièce, par sa partie ( 5 ) de bord, sur la partie ( 4 ) de bord du premier composant ( 2 ) de la pièce, de manière à ce que les arêtes ( 6, 7 ) de bord soient l'une à côté de l'autre par leur matériau ( 9, 10 ) tampon ;
soudage des parties ( 4, 5 ) de bord, de manière à ce que le joint ( 8 ) partiel formé par les parties ( 4, 5 ) de bord soit soudé et qu'ainsi le premier et le deuxième composants ( 2, 3 ) de la pièce soient fixés l'un à l'autre, de sorte que le premier et le deuxième composants ( 2, 3 ) de la pièce forment en moins en partie la pièce ( 1 ), le matériau ( 9, 10 ) tampon étant choisi de façon à supprimer, lors du soudage des parties ( 4, 5 ) de bord, une modification de structure dans le matériau en fonte à graphite sphéroïdale des composants ( 2, 3 ) de la pièce, **caractérisé en ce que** l'on utilise, pour le soudage avec apport, un procédé de soudage avec apport de poudre laser,
dans lequel le procédé de soudage est un procédé ( 13 ) de soudage par faisceau d'électrons,
dans lequel on choisit l'épaisseur du matériau en poudre et les paramètres du procédé de soudage par faisceau d'électrons ainsi que du procédé de soudage avec apport de poudre laser, de manière à ce que la zone ( 14 ), affectée thermiquement du soudage ( 13 ) par le procédé de soudage par faisceau d'électrons, soit disposée dans le matériau ( 9, 10 ) tampon.

2. Procédé suivant la revendication 1,
dans lequel le matériau ( 9, 10 ) tampon est déposé en contenant du nickel et/ou en plusieurs couches.

3. Procédé suivant l'une des revendications 1 à 2,
dans lequel, lors du soudage des parties ( 4, 5 ) de bord, on utilise un procédé de soudage ayant une grande profondeur de soudage et un bain de soudage étroit ainsi qu'une petite zone ( 14 ) affectée thermiquement.
